# EUROPEAN PATENT APPLICATION

(11) **EP 0 709 840 A2**
(43) Date of publication of application: **01.05.1996**
(21) Application number: 95306556.2
(22) Date of filing: 18.09.1995
(51) Int. Cl.: G11B 17/22, G11B 23/03

(54) **Latching cartridge magazines within cartridge storage devices**

(30) Priority: 25.10.1994 US 328855
(71) Applicant: SONY ELECTRONICS INC., Park Ridge, New Jersey 07656-8003 (US)
(72) Inventor: Porter, Ryan Stuart, Monument, Colorado 80132 (US); Permut, Ronald Marc, Louisville, Colorado 80027 (US)
(74) Representative: Cotter, Ivan John

(57) **Abstract**

An apparatus for releasably latching a disk magazine (10) inside a cartridge storage and retrieval system or "jukebox" (14) comprises a latch member connected to an interior wall of the jukebox wall and spring biased away from that wall into a locking condition. A latch surface is formed on an exterior wall of the cartridge magazine (10). During insertion of the magazine (10) into the jukebox (14), the exterior wall of the magazine cams the latch member against its bias. When the latch member becomes substantially aligned with the latch surface, the spring bias of the latch member causes the latch member to snap into engagement with the latch surface. Actuating levers are attached to the latch members. The actuating levers are manually operable to move the latch member against its bias to disengage the latch member from the latch surface during removal of a magazine (10) from the jukebox (14).

## Description

This invention relates generally to the storage of cartridges, for example media cartridges such as optical disc cartridges. More specifically, but not exclusively, the invention relates to the latching of cartridge magazines within cartridge storage devices.

Optical disks, magnetic disks and magneto-optical disks are increasingly popular mediums for digitally storing information. Such disks are typically enclosed in a box shaped disk cartridge having apertures through which a laser light source or magnetic head can read (or write) to the spinning disk contained within the cartridge.

In certain large-scale disk cartridge storage and retrieval systems (sometimes referred to as "jukeboxes"), disk cartridges are stored in one or more racks in an array of storage slots. Commonly, the slots are oriented horizontally and are arranged in a vertical column such that horizontal disk cartridges sit, one on top of another, in the individual slots. Storage and retrieval systems may have one or more such columns of disk cartridge storage slots. This type of system includes a cartridge retrieval mechanism which is movable into position adjacent a slot. The mechanism includes apparatus for grasping a cartridge while in the slot, drawing it out from the slot, holding the cartridge in a sleeve, transporting it to a different location, such as a recording/reading/erasing station, and ejecting the cartridge into that location.

Cartridges of the type used in present jukebox systems have two large nearly square faces which correspond to the top and bottom of the disk, and four thin rectangular faces which surround the disk and connect the top face to the bottom face. The cartridge has a shutter which slidably covers an aperture in one of the large faces and which provides a port through which the disk is presented to the central processing unit. The shutter is slidable to expose the disk contained inside the cartridge, for reading from or writing to the disk.

A portion of the shutter is slidable over one of the four thin faces and includes a catch which is automatically engaged at the reading /writing station to slide the shutter to expose the disk. The thin faces that are perpendicular to the thin face having the shutter catch are slightly tapered (at their ends nearest to the shutter) towards the shutter. The opposite ends of those faces have small rectangular notches that are sometimes used for disk handling.

In some jukebox systems cartridges of this type are loaded into portable cartridge magazines which can be easily installed into the jukebox systems. In such systems, a user loads a number of desired cartridges into the magazine, and inserts the entire magazine inside the jukebox system. The cartridge retrieval system is equipped to remove a selected cartridge directly from the magazine, and to return it to the magazine after use.

Cartridge magazines are normally rectangular boxes which have an open side through which cartridges are removed and inserted by a user or a cartridge retrieval system. It is necessary to insert the magazine into the jukebox open-end first so that the cartridges can be accessed by a cartridge retrieval system positioned inside the jukebox.

It is normally necessary to latch a cartridge magazine within the jukebox in order to prevent movement of the magazine within the jukebox during use. Existing jukeboxes involve complex assemblies for latching the magazines in place. One such example utilizes spring loaded latches positioned inside the jukebox which release upon insertion of the magazine to engage steel pins positioned in the magazine sides. To unlatch the magazine for removal, it is necessary to activate a series of linkages which operate to release the latches and to propel the magazine slightly out of the jukebox.

It is also important for a jukebox to be provided with a mechanism which prevents a magazine from being inserted into the jukebox upside down or sideways. Otherwise, the cartridge retrieval mechanisms may be unable to withdraw cartridges from the magazine. Existing devices for preventing such "mis-insertion" of the magazine rely on an asymmetrical magazine shape. Such designs increase the cost to manufacture the magazines because they require different components for each of the various sides of the magazine.

First to third aspects of the invention are set out in the claims 1, 11 and 20 hereof.

According to a further aspect of the invention there is provided an apparatus for latching a cartridge magazine within a jukebox. The jukebox has a housing which includes a wall and which defines a chamber. The magazine also has a wall. A latch member is connected to either the jukebox wall or the magazine wall, and is spring biased toward that wall and into a locking condition. The latch member is moveable by actuating means into an unlocking condition which opposes the bias of the spring. A latch surface is formed on the other of the walls (i.e. on the magazine wall or the jukebox wall). The latch surface is positioned such that, when the magazine is inside the jukebox and the latch member is allowed to be carried by its bias into the locking condition, it will receive the latch member to latch the magazine within the jukebox.

A preferred form of implementation of the invention described hereinbelow provides:
a simple mechanism for latching a cartridge magazine within a cartridge storage and retrieval system;
a simple means for preventing improper insertion of a magazine into a cartridge storage and retrieval system without using asymmetrical parts;
a portable magazine assembly and means for locking it into a large-scale disk cartridge storage and retrieval system; and
a removable multiple cartridge optical disk magazine.

The invention will now be further described, by way of illustrative and non-limiting example, with reference to the accompanying drawings, in which:
Fig. 1 is a perspective view of a jukebox in which the invention can be embodied, showing a door to the jukebox open and further showing a magazine being installed in the jukebox and a cartridge being installed in a magazine.
Fig. 2A is an exploded view of a magazine.
Fig. 2B is a partial top section view of a magazine side taken along the plane designated 2B-2B in Fig. 2A and further showing a foot projection from a magazine bottom engaged with the magazine side.
Fig. 3A is an exploded view of an interior side of a magazine side.
Fig. 3B is a perspective view of a front most portion of the interior side of the magazine side shown in Fig. 3A.
Fig. 3C is a side elevation view of the interior side of the magazine side shown in Fig. 3A, with a cartridge lock and a manual release tab removed.
Figs. 4A and 4B are perspective views of a manual release tab.
Figs. 5A and 5B are perspective views of a cartridge lock.
Figs. 6A and 6B are perspective views of a release tab.
Figs. 6C and 6D are perspective views of a latch spring assembly, a release tab and a latch spring being shown separated from each other in Fig. 6C and being shown attached in Fig. 6D.
Fig. 7 is a perspective view of an interior surface of a jukebox wall, showing the latch spring assembly mounted to the jukebox wall.
Fig. 8 is a perspective view of an exterior surface of the jukebox wall of Fig. 7, showing the latch spring assembly mounted to the jukebox wall.
Figs. 9A and 9B are a top plan view and a side elevation view, respectively, of a standard disk cartridge of a type which can be loaded into the magazine.
Fig. 10 is a side elevation view of an interior side of a magazine side, showing the cartridge lock in the locked position.
Fig. 11 is a cross-sectional top view of the magazine side of Fig. 10, taken along the plane designated 11-11 in Fig. 10.
Fig. 12 is a partial perspective view of an exterior surface of the magazine side and the latch spring.
Fig. 13 is a side elevation view of a magazine side, viewed from the exterior of the magazine, showing the cartridge lock in the locked position.
Fig. 14 is a cross-sectional top view similar to the view of Fig. 11, further showing the cartridge lock being held in the unlocked position by a tang on a latch spring member, and further showing in dashed lines the tang as it is approached by a magazine but before it cams the cartridge lock into the unlocked position.
Fig. 15 is a side elevation view of the interior of a magazine side, showing the cartridge lock in the unlocked position when unlocked via a manual release tab.
Fig. 16 is a side elevational view of the exterior surface of the magazine side of Fig. 15 showing the cartridge lock and the manual release tab in their unlocked conditions.
Fig. 17A is a partial cross-sectional top view of a magazine side taken along the plane designated 17A-17A in Fig. 16, and showing the manual release tab pivoted to an unlocked position to move the cartridge lock to an unlocked position.
Fig. 17B is a cross-sectional top view taken along the plane designated 17B-17B in Fig. 13 and showing the positioning of the manual release tab when the cartridge lock is in the locked position.
Fig. 18 is a cross sectional top view of a magazine side taken along the same plane as that shown in Fig. 14 and further showing an improperly inserted cartridge being blocked by a blocking member.
Fig 19 is a perspective view of a magazine being advanced towards a pair of latch spring members (for the purpose of the figure, the latch spring members are not shown connected to jukebox walls).
Fig. 20 is a partial cross-sectional top view of a magazine side engaged with a release tab in the manner which occurs after a magazine is installed in a jukebox.
Fig. 21 is a perspective view of a portion of a jukebox wall which includes a first alternative magazine latching assembly embodying the present invention.
Fig. 22 is a perspective view of a portion of a jukebox wall which includes a second alternative latching assembly embodying the present invention. Also shown is a perspective view of a cartridge magazine being advanced towards the jukebox wall as is done during installation of a magazine into a jukebox.
Fig. 23 is a cross-sectional top view of a jukebox wall and latching assembly taken along the plane designated 23-23 in Fig. 22.
Fig. 24 is a perspective top view of a release plate in accordance with the second alternative embodiment of the present invention.
Fig. 25 is an exploded view of a magazine having a third alternative embodiment of a magazine latching assembly according to the present invention.
Fig. 26 is a perspective view of the magazine of Fig. 25.

### I. Structure

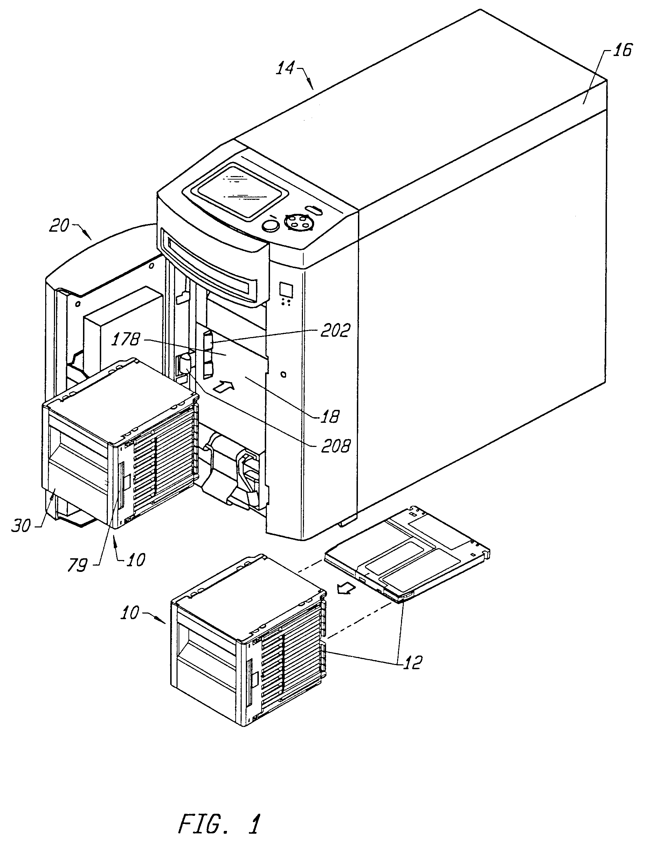

Fig. 1 shows a magazine 10 for storing a plurality of optical disks 12. The magazine 10 is operable in connection with a disk "jukebox" such as the one designated 14 in Fig. 1 and which is normally interfaced with a personal or mainframe computer (not shown). A jukebox 14 of this type includes a housing 16 having a chamber 18 and a door 20 hinged to the housing 16 and moveable between a closed position (not shown) and an open position to permit access to the chamber 18. Inside the jukebox housing 14 is a robotic disk retrieval system (not shown) which, upon receiving a command to do so, retrieves one of the disk cartridges 12 from the magazine 10 and moves it into a disk reading location (not shown). At the disk reading location, the information stored on the disk is retrieved from the disk by a magneto-optic read head (not shown).

### (a) Magazine Housing

Referring to Fig. 2A, the preferred magazine 10 is comprised of top and bottom plates 22, 24, respectively, a pair of magazine sides 26, and a front section 30. For the purposes of this discussion, terms such as "top," "bottom," "up," "down," etc. indicate the relative positions of the various described features when the magazine 10 is positioned with its bottom plate 24 horizontal and with the magazine sides 26 extending vertically from it. Terms such as "front" and "back" refer to the positioning of the various components when the magazine 10 is inside a jukebox such as the jukebox 14. The front section 30 of the magazine is therefore the portion which is exposed when the magazine is inside the jukebox 14 and the door 20 to the jukebox is open as shown in Fig. 1. It should be appreciated, however, that the magazine may be oriented in other ways as well. It should also be appreciated that, while the magazine is comprised of a number of walls joined together to form a rectangular box, other types of appropriately rigid frameworks may also be utilized without exceeding the scope of the present invention.

### (i) Magazine Top and Bottom

Top plate 22 of the magazine 10 is a rectangular plate having a pair of parallel side edges 32, 34 and front and rear edges 36, 38 which are perpendicular to the side edges 32, 34. Extending from each of the side edges 32, 34 is a pair of rearwardly-directed foot projections 40. The rear corners (i.e., the corners formed between rear edge 38 and side edges 32 and 34) are cut out. A pair of rearwardly extending tabs 42 extend from the rear corners. Each of the tabs 42 angles slightly upwards from the top plate 22.

Bottom plate 24 is virtually identical to the top plate 22. Foot projections 44, which are identical to the foot projections 40, extend from sides 46, 48 of the bottom plate 24.

The magazine top and bottom are preferably made from a stiff, flat, sheet metal, such as autoferritically coated carbon steel (1010/1020 CRS) having a thickness of approximately 1.0 mm.

### (ii) Magazine Front Section

The magazine front section 30 is preferably a hollow rectangular box formed of injection-molded plastic. The front section 30 has a top surface 50, a pair of elongate side members 52, and a front surface 54. Front surface 54 may have a recessed portion 56 and a plate 58 which covers part of recessed portion 56 and which may be used as a handle during installation of the magazine 10 into the jukebox unit 14 (See Fig. 1).

Each of the side walls 52 has an elongate rib 60 near front surface 54 of magazine front section 30. Also on each side 52, near the bottom, is a projection 62 which angles upwardly from the side 52. Top 50 of the magazine front section 30 has a pair of ends 64a, 64b which extend slightly laterally of the sides 52.

The magazine front section may be made from an injection molded plastic having good temperature stability and structure rigidity. One example of such a plastic is cycoloy C-2950 HF, a PC/ABS blend produced by General Electric.

### (iii) Magazine Sides

The magazine sides are preferably formed of an injection molded plastic having low friction characteristics when used in sliding contact with plastics of the type used for standard ISO 5.25" cartridges. The plastic used should have temperature stability and mechanical rigidity. A preferred material for the magazine sides is a glass and PTFE filled PC, such as DFL-4034 EM FR MG, which is produced by LNP.

The magazine sides 26 will be described in two parts. First, the aspects of the magazine sides which relate to the fastener-free assembly of the magazine 10 will be described in order to facilitate an understanding of how the magazine sides are connected to the top and bottom plates 22, 24 and the magazine front section 30. The aspects of the magazine sides 26 which relate to the cartridge locking and magazine locking functions of the present apparatus will be described later.

Because each of the magazine sides 26 is identical, a single set of reference numerals will be used to refer to the various components of the magazine sides.

Each of the magazine sides 26 has an interior side 66 and an exterior side 68 (see Fig. 2A). The terms "interior" and "exterior" refer to the direction in which the respective magazine sides 26 are facing when the magazine 10 is fully assembled. When the magazine 10 is assembled, the interior side 66 faces the interior of the magazine, and the exterior side 68 faces outwardly.

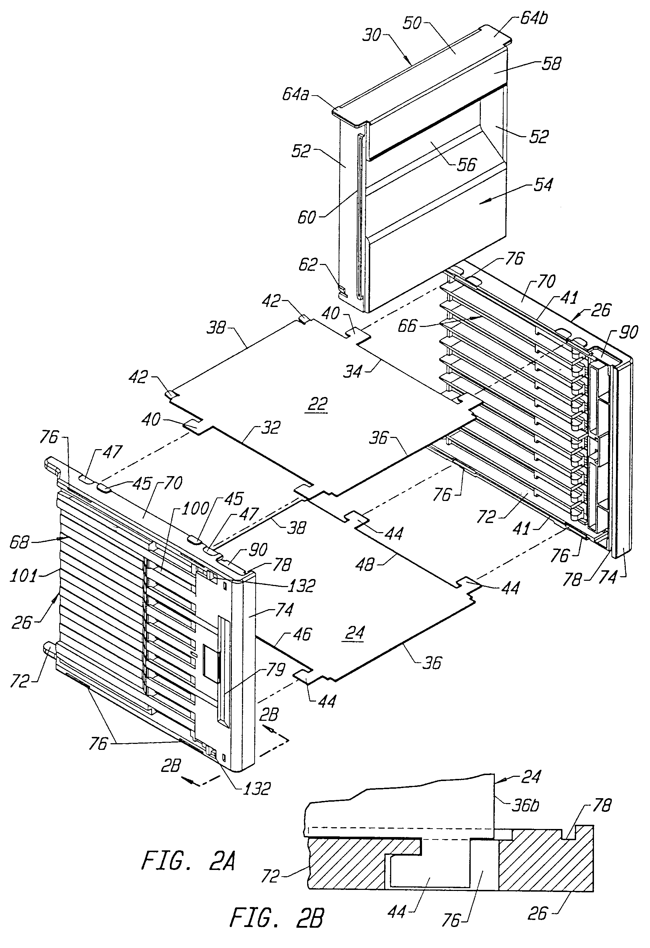

Magazine side 26 further has end plates 70 and a forward face 74. Through slots 76 extend laterally through the plates 70. The through slots 76 are L-shaped as shown in the cross-section view of Fig. 2B and are proportioned to receive the foot projections, 40, 44 of the top and bottom plates 22, 24, respectively, to allow the top and bottom plates 22, 24 to be securely fastened to the magazine sides 26.

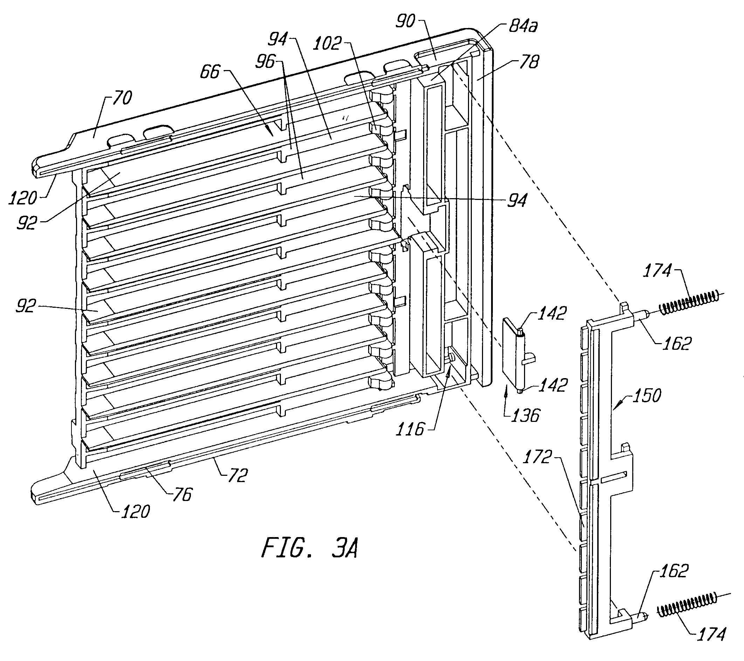

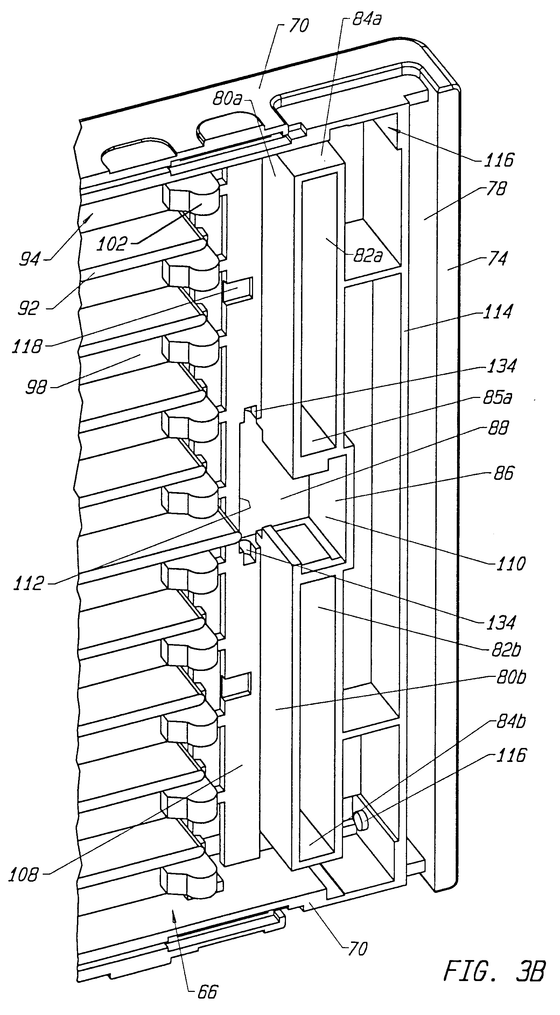

Referring to Figs. 3A - 3C, interior side 66 of the magazine side 26 includes a vertical slot 78 (best shown in Fig. 3B) which is proportioned to slidingly receive one of the ribs 60 formed on the magazine front section 30.

Grooves 41 are formed along each of the plates 70. When the magazine is assembled, these grooves receive the respective sides 32, 34 and 46, 48 of the magazine top and bottom 22, 24 (see Fig. 2A).

Formed within interior side 66 of the magazine side are a plurality of internal walls designated 80a, 80b, 82a, 82b, 84a, 84b, 86 which are joined to form a substantially rectangular structure. A gap 88 is formed between the structural walls 80a and 80b. The structural walls are positioned on the interior side 66 of the magazine side such that, as the magazine front is joined to the magazine sides 26 (i.e. by sliding the ribs 60 into the vertical slots 78), the projections 62 (Fig. 2A) on the magazine front section 30 deflect against and then snap beneath the internal walls 84b to secure the magazine sides 26 to the magazine front section 30.

When the magazine front section 30 and magazine sides 26 are joined together, the ends 64a, 64b on top 50 of magazine front section 30 rest within recesses 90 formed on upper plate 70 of each magazine side 26. Moreover, when the magazine 10 is assembled, the vertical walls 52 of the magazine front section 30 abut the forward edges 36, 36 of the top and bottom plates 22, 24 and thus prevent the top and bottom plates 22, 24 from sliding forward. This is needed to prevent the foot projections 44, 40 from disengaging from their respective L-shaped through slots 76 (see Fig. 2B) on the magazine sides 26.

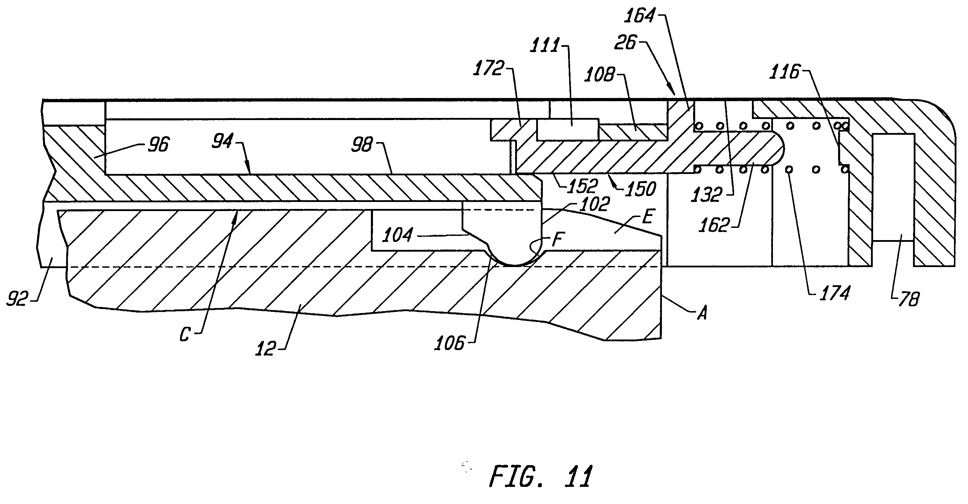

Referring again to Fig. 3A, the interior portion 66 of each magazine side a has a plurality of spaced shelves 92 extending parallel to the upper and lower plates 70. Each of the shelves 92 will support one side C (see Fig. 11) of a disk cartridge (designated A in Fig. 11). In other words, when the magazine 10 is fully assembled, a disk cartridge may be inserted into the magazine (through the back of the magazine, which is open) and positioned with one of its sides resting on a shelf 92 in one magazine side 26 and with its opposite side resting on another shelf 92 in the other magazine side.

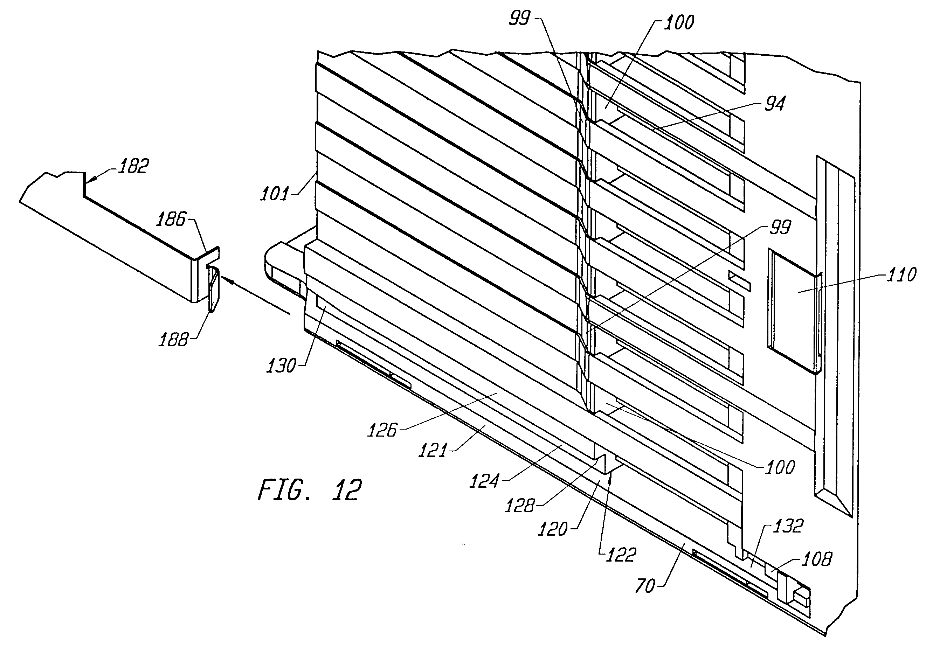

Spaced on either side each of the shelves 92 is an integral spring member 94. Each spring member 94 has a fixed end 96 and an unsecured end 98 which is closer to the front of the magazine side than the fixed portion 96. Each spring member 94 can be seen through a corresponding slot 100 in the exterior 68 of magazine side (see e.g. Fig. 12). As can be seen in Fig. 12, the spring members 94 are set back within the slots 100.

The unsecured end 98 of each spring member 94 has a laterally extending protrusion 102 which faces the interior 66 of the magazine side. The protrusion 102 has a cross-section which is contoured to engage with a recess in the cartridge side. As can be seen in the cross-section view of Fig. 11, the protrusion has an angled surface 104 and a curved surface 106. Curved surface 106 is proportioned to mate with the curved recess F in the side C of a disk cartridge A.

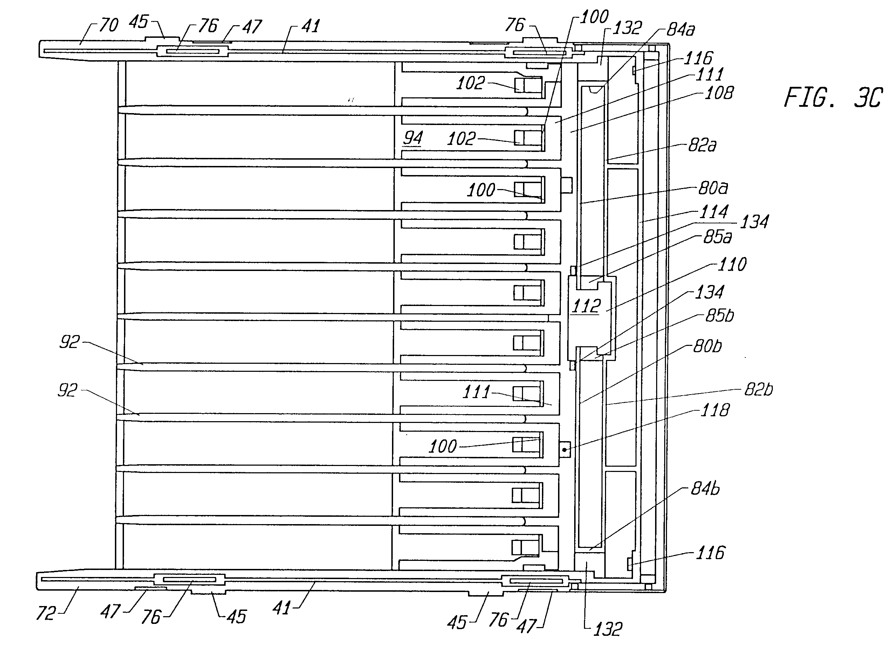

Referring to Fig. 3C, a vertical surface 108 lies between the end plates 70 of the magazine side, between the protrusions 102 and the structural walls 80a, 80b. A cut out 110 is formed in the magazine side, adjacent to the surface 108. The surface 108 has a cut away portion 112 which is contiguous with the cut out 110. A pair of reliefs 118 are formed in the surface 108.

Between the surface 108 and the spring members 94 are a plurality of recessed areas 111. The slots 100 described above are slightly visible between the protrusions 102 and the recessed areas 111 in Fig. 3C.

A structural wall 114 is spaced from, and parallel to, front face 74 of the magazine side. A pair of short cylindrical protrusions 116 extend from the structural wall 114, each one being on an opposite end of the structural wall. Each of the protrusions 116 extends towards one of the structural walls 82a, 82b.

The end plates 70 of the magazine side 26 are longer than the portion of the magazine side which extends between them. Thus, lower surface 120 each 70 (Fig. 3A) extends laterally of the magazine side.

Referring to Fig. 12, a wall 122 extends normally of the surface 120. The wall 122 has a recessed base portion 124 as well as an upper portion 126 which forms a shoulder 128 with the recessed portion 124. Back end 130 of upper portion 126 is tapered slightly away from surface 120.

Still referring to Fig. 12, it can be seen that the exterior surface of the magazine side 26 has a ramped portion 99 which angles away from the magazine side 26 as it nears the cutouts 100.

Cutouts 132 (Fig. 3C) extend through the magazine sides 26, adjacent to end plates 70.

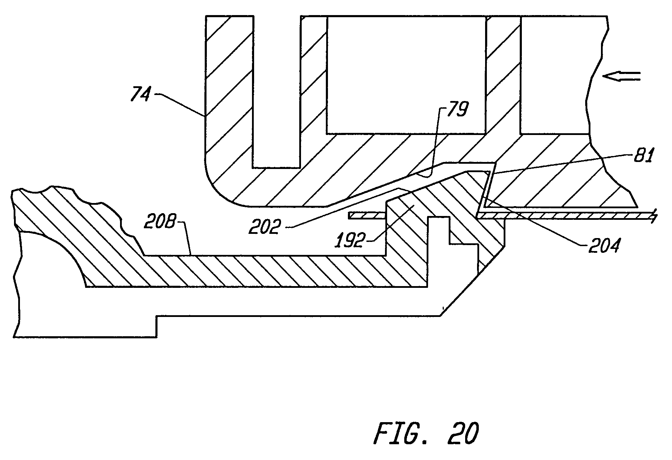

A latching face 79 (Figs. 2A, 19 and 20) is formed on exterior surface 68 of magazine side 26, between front face 74 and cutout 110. As can be seen in the cross-section view of Fig. 20, the latching face tapers towards interior side 66, and has a catching wall 81.

### (b) Manual Release Tabs

Included in the cut away portion 112 of vertically extending surface 108 are a pair of cylindrical depressions 134 (Fig. 3C) which are oriented vertically on opposite sides of the cut away portion 112. The cylindrical depressions 134 form a seat in which a manual release tab 136 is positioned.

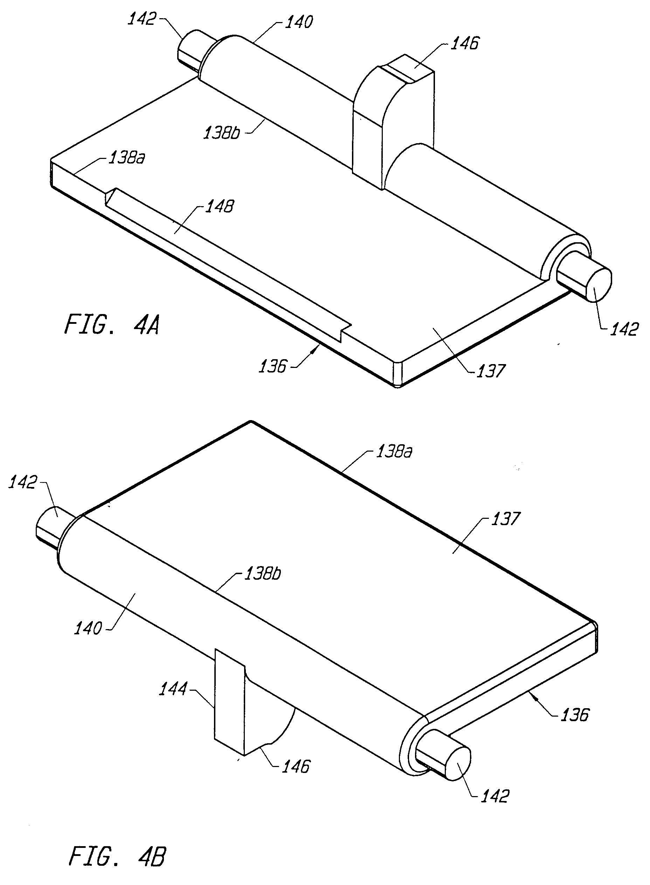

Referring to Figs. 4A and 4B, the manual release tab 136 is comprised of a rectangular plate 137 having a pair of parallel long sides 138a, 138b. Side 138b is formed into a partial cylinder 140 having cylindrical projections 142 concentrically disposed at its opposite ends.

Centered along the cylinder 140, between the cylindrical projections 142 is a camming block 144 which is substantially perpendicular to the rectangular plate 137. The camming block 144 has a recessed surface 146 which faces away from the rectangular plate 137. A fingernail catch 148 is formed along long side 138a of rectangular plate 137, on the same side of the plate 137 from which the camming block 144 extends.

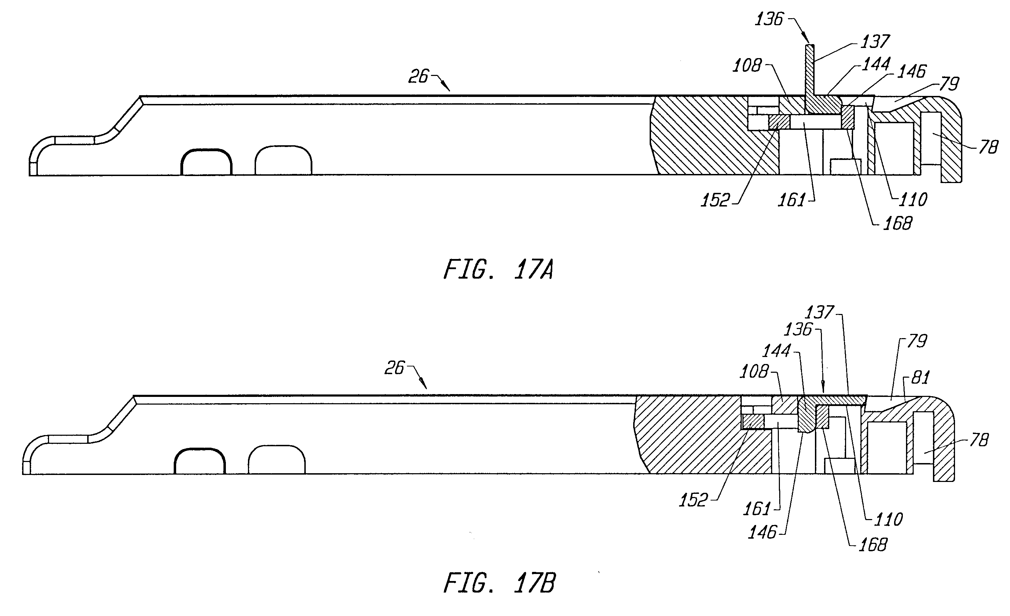

As can be seen in Fig. 3A, manual release tab 136 is positioned in the cut away 112 of vertical surface 108 in the magazine side 26 with cylindrical projections 142 disposed within cylindrical depressions 134 (these are most easily seen in Fig. 3C). Manual release tab 136 is pivotable about the cylindrical projections 142 between an open position in which the rectangular plate 137 is extending through the cut away 112 in a direction substantially perpendicular to the magazine side 26 (Fig. 17A) and a closed position in which the rectangular plate 137 covers the cut out 110 (see Fig. 17B).

The manual release tabs may be made from an injection molded plastic having good temperature stability, structural rigidity, impact resistance and wear resistance. One such material is glass filled nylon RF-1006 FR made by LNP.

### (c) Cartridge Lock

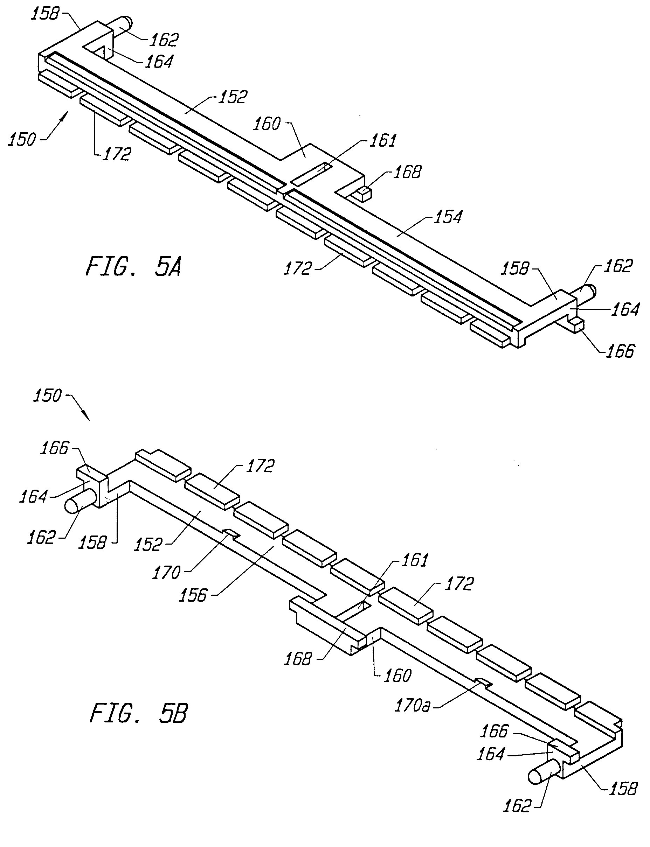

Manual release tab 136 is held in place by a cartridge lock 150. Referring to Figs. 5A and 5B, the cartridge lock 150 is comprised of an elongate plate 152, the interior side of which is shown in Fig. 5A and the exterior side of which is shown in Fig. 5B. The terms "interior" and "exterior" refer to the direction in which the respective sides are facing when the magazine 10 is fully assembled. In other words, when the magazine 10 is assembled, the interior side of the cartridge lock faces the interior of the magazine, and the exterior side of the cartridge lock faces outwardly and contacts the interior 66 of the magazine side 26.

As can be seen in Fig. 5A, the elongate plate 152 is substantially E-shaped in that it has a pair of laterally extending portions 158 at each end and a third laterally extending portion 160 centered between the laterally extending portions 158.

A pair of cylindrical projections 162 are located on laterally extending portions 158. Each of the laterally extending portions 158 also has an L-shaped tab 164 which extends in a direction normal to exterior side 156 of the elongate plate 152. Each tab 164 has a member 166 which is parallel to the longitudinal axis of the elongate plate 152.

A rectilinear projection 168 extends from laterally extending portion 160 at the exterior side 156 of the cartridge lock. A slot 161 is formed through portion 160.

On opposite sides of the laterally extending portion 160 are a pair of catches 170 designed to engage cavities 118 of surface 108 (see Fig. 3C). A plurality of spaced blocking members 172 is formed along the exterior side 156 of the elongate plate 152.

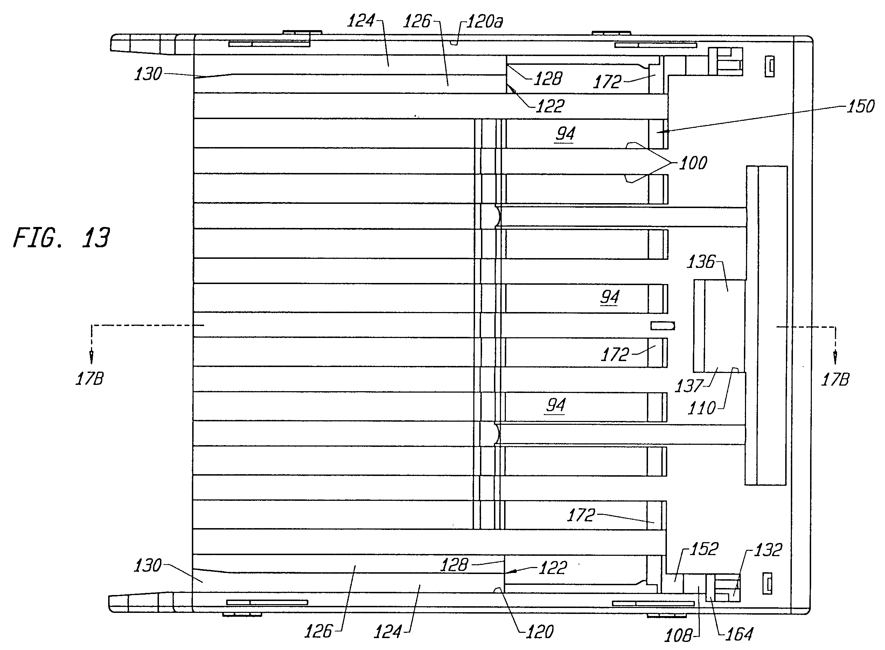

As can be seen in Fig. 3A, the cartridge lock 150 is installed in the magazine side 26 with its exterior side 156 (labeled in Fig. 5B) touching surface 108 of magazine side 26. Catches 170 (Fig. 5B) are slidingly engaged with reliefs 118 on the vertical surface 108. Laterally extending portions 158 rest between their corresponding internal walls 84a, 84b and plates 70 of magazine side 26, with the tabs 164 exposed through cutouts 132 (see, for example, Fig. 13).

As the cartridge lock 150 is installed, portion 160 drops between internal walls 80a and 80b, and its rectilinear projection 168 drops between wall 86 and wall members 85a, 85b. Once installed, projection 168 is slidable along wall members 85a, 85b at the exterior side 68 of magazine side 26.

Springs 174 are disposed around cylindrical projections 162 of the cartridge lock 150, and around respective ones of the short cylindrical projections 116 (see Fig. 3C) in the magazine side.

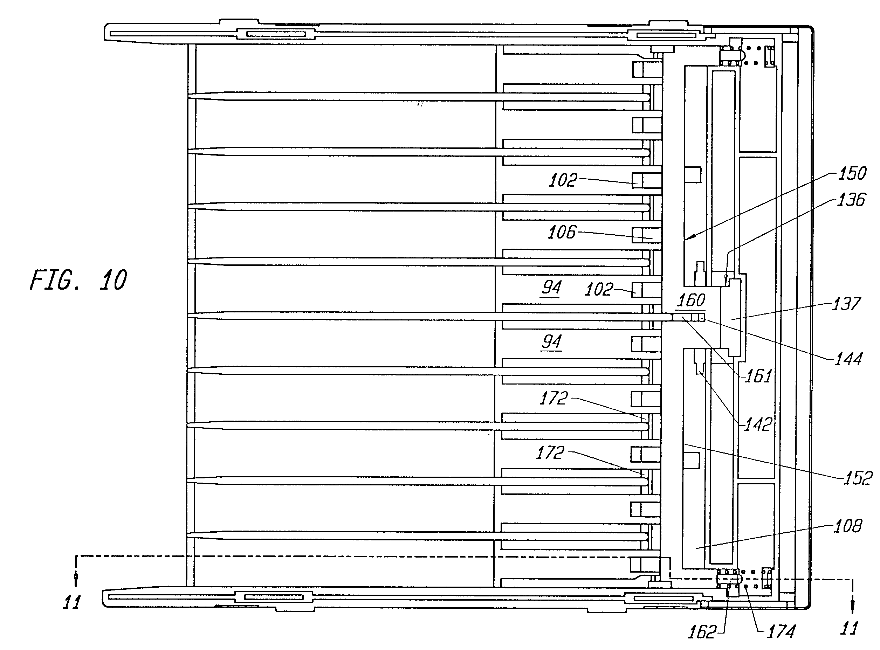

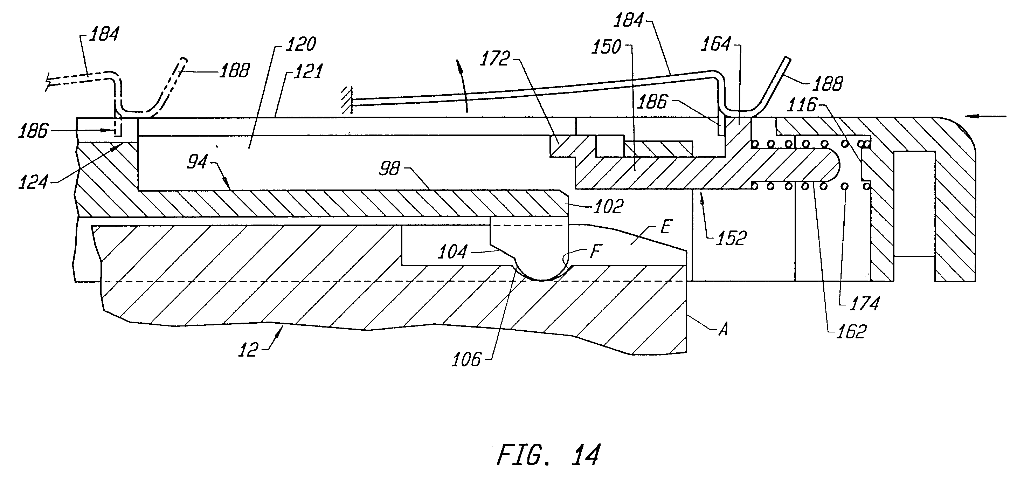

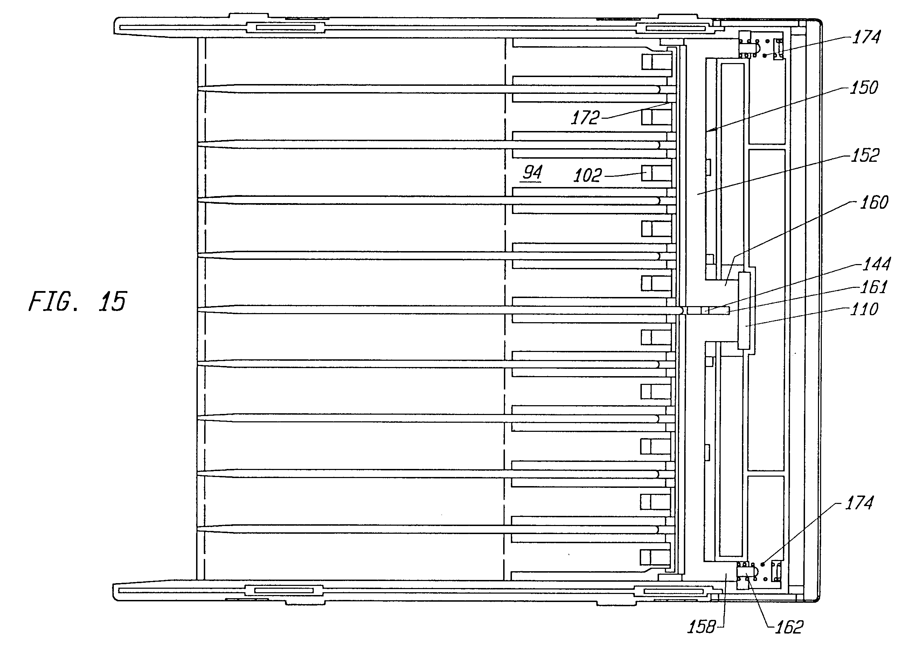

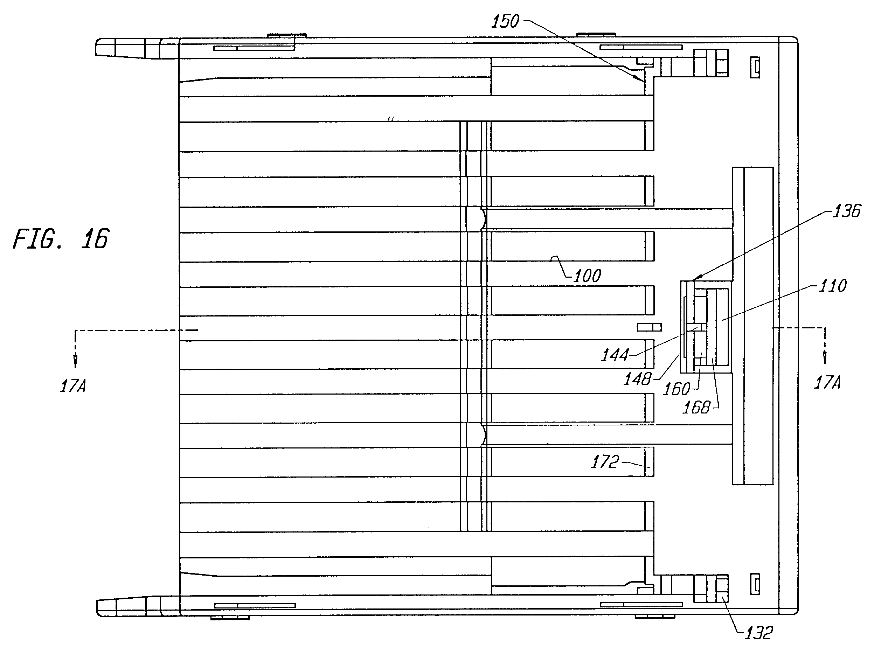

Each of the blocking members 172 of cartridge lock 150 extends behind a respective one of the spring members 94, on the opposite side of the spring member 94 from the protrusion 102. Cartridge lock 150 is slidable between an unlocked condition (Figs. 14-16) in which the springs 174 are compressed and the cartridge lock 150 is positioned such that the blocking members 172 are behind the spring member 94, and a locked condition (Figs. 10, 11 and 13) in which the springs 174 are extended and the elongate plate 152 is advanced rearwardly relative to the magazine side and thus contacts the spring members 94.

The cartridge lock 150 is positioned over the manual release tab 136 such that the camming member 144 of the manual release tab is disposed within slot 161 of cartridge locking member 150. As will be described in detail below, manual release tab 136 is pivotable about cylindrical projections 142 to cause camming member 144 to push the cartridge lock 150 into the unlocked condition (see Figs. 17A and 17B).

Automatic means of moving the cartridge lock between the unlocked and locked conditions are also provided The mechanisms for actuating movement of the cartridge lock will be fully described in the Operation section below.

The cartridge locks are preferably made from an injection-molded plastic having good temperature stability and flexural rigidity. The material should not be one which will creep over time and temperature with a sustained static load.

The expansion coefficient of the cartridge lock material should be compatible with that of magazine side material. Low friction properties are also desirable. One example of material possessing the above properties is glass filled nylon RF-1002 FR which is manufactured by LNP.

### (d) Jukebox Interface Mechanism

As can be seen in Fig. 1, a jukebox 14 of a type with which apparatus embodying the invention can be used is provided to have a pair of interior walls 178 (only one can be seen in Fig. 1) on opposite sides of the chamber 18. When the magazine 10 is installed in the chamber 18, each of the magazine sides 26 faces one of the walls 178. Each of the walls 178 is provided to have one or more release tabs 180 (Fig. 6A. The arm portion 208 of each of two release tabs can be seen in Fig. 1). Briefly stated, these release tabs become engaged within recessed region 79 (see Fig. 2A) of the exterior 68 of the magazine sides. The release tabs 180 and their associated components will next be described.

### (e) Latch Spring Assembly

Referring to Figs. 6A-6D, each release tab 180 is mounted to an E-shaped spring plate 182. The spring plate 182 has a pair of laterally extending prongs 184, each of which is a mirror image of the other. The end of each prong 184 is split into two portions: a tang 186 which extends perpendicularly from the prong 184 and a tab 188 which extends perpendicularly from the prong and then bends upon itself to form a U-shape (a top view of a tab 188 can be seen in Fig. 14).

Centered on the spring plate 182, between prongs 184, is a large rectangular plate 190. Plate 190 has a pair of protruding sections 210 and a pair of small cutouts 206 in each of the protruding sections.

The latch spring plates 182 are preferably made from a sheet steel, such as 1/2H 302 stainless steel or other sheet steels having similar spring characteristics. During manufacture, all form bends should be made across the grain of the sheet steel for optimum fatigue and notch resistance.

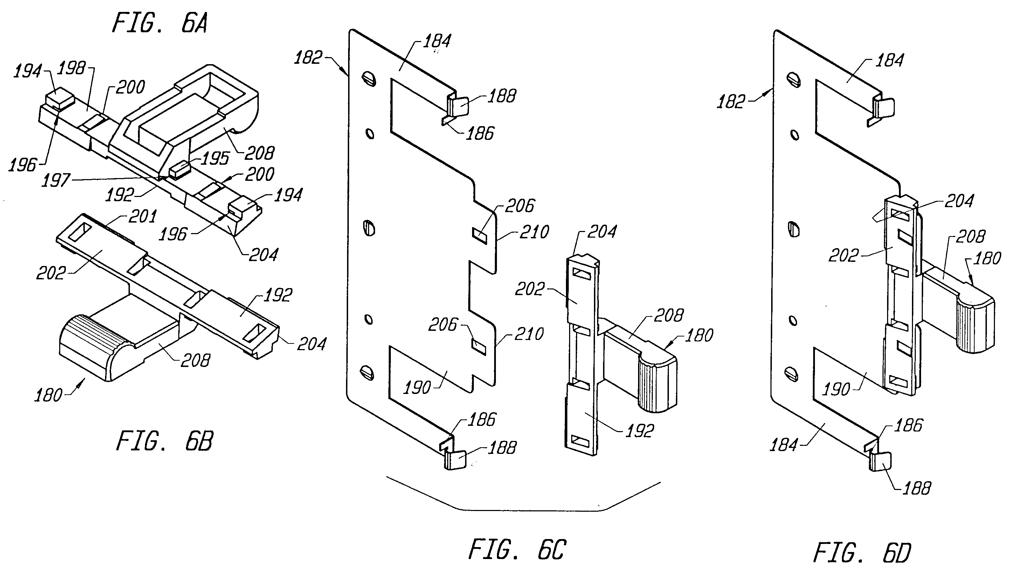

Referring to Figs. 6A and 6B, release tab 180 has a latch member 192 formed at one end. The latch member 192 has a number of raised portions 194, 195 each of which has a slot 196, 197 passing between it and surface 198 of the latch member 192. Also, formed on surface 198 are ramped catch surfaces 200.

The latch member 192 has a substantially triangular cross section, formed by wide faces 198 and 202 and a narrow catch face 204.

Referring to Fig. 6C, the release tab 180 is mounted to the spring plate 182 by sliding each of the protruding sections 210 of the plate 190 between a raised portion 194 and a raised portion 195 thereby causing the edges of the protruding sections 210 to slide into slots 196, 197. The ramped catch surfaces 200 snap into cut outs 206, leaving the arm 208 of the release tab 180 positioned between the protruding sections 210.

As shown in Fig. 6D, when the release tab 180 is mounted to the spring plate 182, the narrow catch face 204 on the latch member 192 extends laterally from the plate 190.

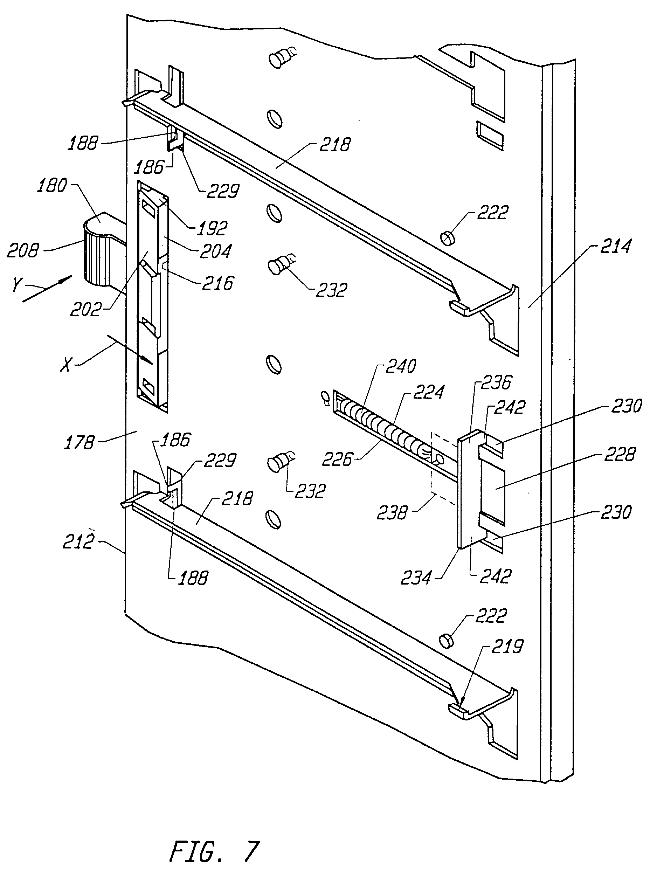

As shown in Fig. 7, a jukebox wall 178 has a front edge 212 and a back edge 214. An elongate cut out 216 is formed in the wall 178 close to, and parallel with, front edge 212. A substantially horizontal shelf 218 extends from wall 178. If the jukebox 14 has capacity for more than one magazine, more than one shelf 218 is provided.

A guide pin 222 protrudes from the wall 178 at a location slightly above the shelf 218. A vertical projection 219 is connected to the shelf 218, near the back edge 214 of the wall 178.

A second cut out 224 is formed near the back edge 214 of the wall 178. It has a substantially horizontal elongate section 226 and a shorter substantially vertical section 228 which joins the elongate section 226 to form a "T". A pair of small cut outs 230 are positioned above and below the short section 228 of cut out 224.

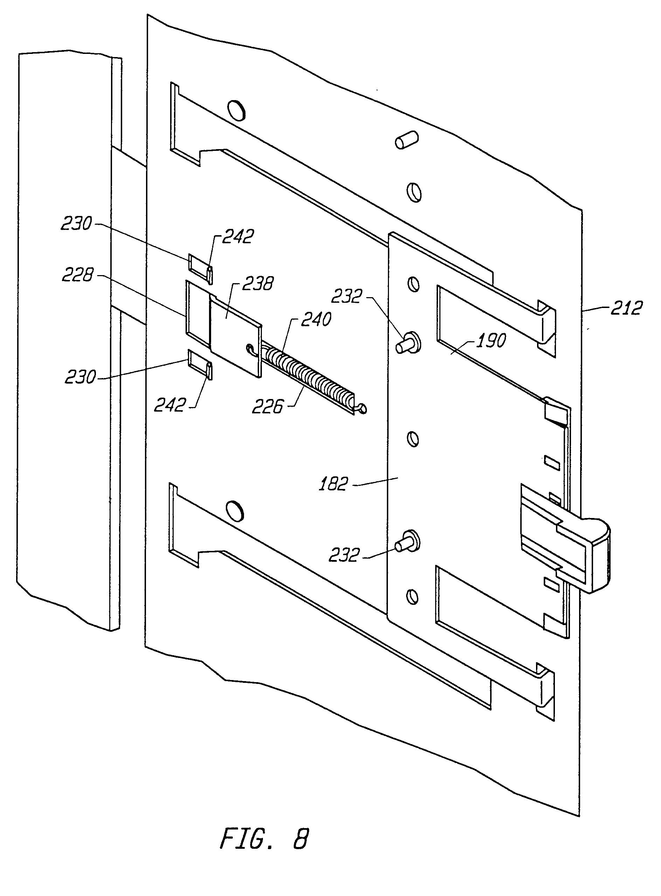

Spring plate 182 is secured to wall 178 by a pair of threaded stand offs 232 (see also Fig. 8). The spring plate 182 is mounted to the exterior surface of the wall 178 and is oriented such that faces 202 and 204 of the latch member 192 extends through the slot 216. Because of the triangular cross section of the latch member 192, the face 202 angles away from the wall 178 as shown in Fig. 7. Moreover, as best shown in Fig. 12, the tangs 186 and tabs 188 extend through cutouts 229 in the wall 178, near shelves 218. The top through cutout 229 need not be near a shelf 218.

The spring plate 182 can be deflected away from wall 178 by applying pressure to the face 202 in the direction of the arrow designated X in Fig. 7, or to the arm 208 in the direction of the arrow Y in Fig. 7. The spring plate 182 will spring back to its resting state (which is the state shown in Fig. 8) when pressure on the face 202 or arm 208 is relieved.

A magazine stop 234 is provided which is comprised of a push plate 236 extending perpendicularly from the interior surface of the wall 178 and a spring connector plate 238 joined to the push plate 234 and extending perpendicularly from it. Push plate 236 extends through the short section 228 of cut out 224, and the spring connector plate 238 is slidable along the exterior surface of wall 178. Tabs 242 extend from push plate 236 and protrude through cut outs 230.

Spring connector plate 238 is connected to one end of spring 240 which has another end connected to the wall 178 adjacent to the elongate section 226 of slot 224. The spring 240 is disposed within the elongate section 226. Push plate 236 is slidable within the cut out 224 towards the back edge 214 of wall 178 when a force sufficient to overcome the force of spring 240 is applied to it.

It should be pointed out that the magazine sides 26, cartridge lock 150, manual release tabs 136, latch spring plates 182 and the components affiliated with them are not "left" and "right" parts. Rather, the preferred embodiment of the present invention is designed such that identical components are used for both sides of the magazine and the magazine-jukebox wall interface in order to minimize component parts costs.

### (e) Disk Cartridges

An understanding of the locking and misinsertion prevention functions of the magazine requires an understanding of the features of disk cartridges which are housed by the magazine.

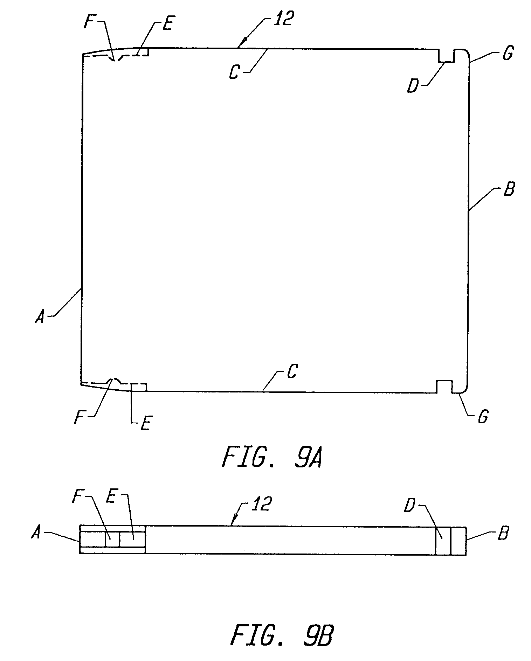

Referring to Figs. 9A and 9B, it can be seen that a disk cartridge 12 includes a forward edge A, which is the end at which the shutter (not shown) is located. The shutter is slidable to expose the disk contained inside the cartridge, for reading from or writing to the disk and thereby provides a port through which the cartridge is interfaced to the central processing unit. A rear edge B is parallel to the forward edge A.

Sides C are tapered near forward edge A. A pair of recessed portions E are formed at the tapered portions of sides C. Each recessed portion E includes a curved section F.

Near the rear edge B are a pair of notches D. The corners G between sides C and edge B are squared.

### II. Operation

### (a) Cartridge Locking and Unlocking

As shown in Figure 1, disk cartridges 12 are inserted into the assembled magazine 10 through an opening in the back of the magazine. During transport (i.e., before a loaded magazine is installed in a jukebox 14), the magazine 10 is in a locked condition which prevents the disk cartridges 12 from falling out through the opening (not shown) in the back of the magazine 10. Before disks can be inserted into or removed from the magazine (i.e. either manually or by a robotic unloading device positioned inside the jukebox), the magazine must be placed in an unlocked condition.

Figs. 10, 11 and 13 show the locked cartridge condition of the magazine. Locking of cartridges in the magazine is carried out by moving the cartridge lock 150 into a position in which its member 152 blocks outward deflection of the spring members 94.

Figure 11 shows a disk cartridge 12 supported on one of its sides C by a shelf 92 in one of the magazine sides 26. It should be appreciated that the opposite side of the cartridge is supported and locked in place in an identical fashion by a magazine side which is a mirror image of the magazine side 26 shown. Protrusion 102 of spring member 94 extends into the recessed portion E of the disk cartridge 12, with curved surface 106 resting in curved region F of the cartridge.

The cartridge lock 150 is positioned such that the elongate plate 152 rests against the unsecured ends 98 of spring members 94, thereby preventing the unsecured ends 98 from deflecting away from the cartridge 12. The spring 174 disposed around the cylindrical protrusions 162 is at its maximum extension. Because the unsecured ends 98 cannot deflect, the protrusions 102 remains engaged with the curved recesses F in the respective disk cartridges, and prevent removal of the disk cartridges from the magazine 10.

Tabs 164 are positioned in abutment with the vertical surface 108. As can be seen in Fig. 17B, the manual release tab 136 is oriented with its rectangular plate 137 extending across the cut out 110 in the magazine side.

Figs. 14, 15 and 16 show the cartridge lock 150 in its unlocked condition. Referring to Fig. 14, when in the unlocked condition the cartridge lock 150 is moved towards the front of the magazine side 26, thereby compressing springs 174. Elongate plate 152 is moved away from the unsecured end 98 of spring members 94, thereby giving the spring members 94 room to deflect. This allows curved surfaces 106 of protrusions 102 to move away from curved recesses F on each disk cartridge 12.

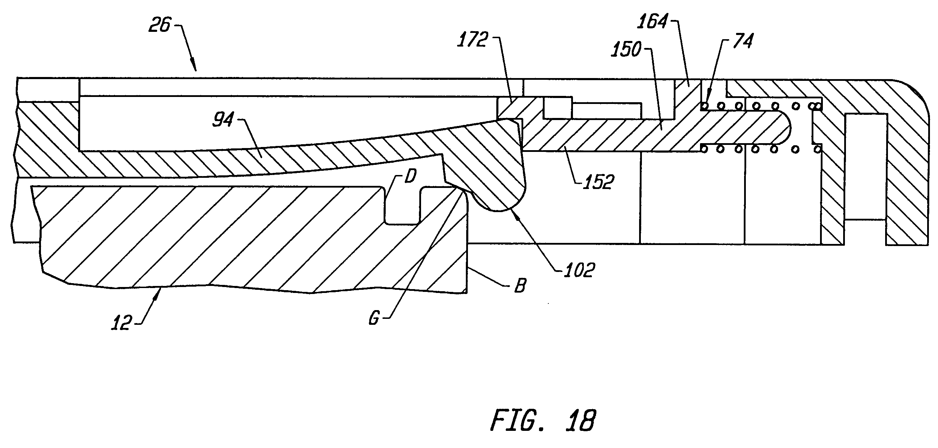

Blocking members 172 of the cartridge lock 150 remain behind the spring members 94 to limit the amount by which they can deflect. This operates to prevent backwards insertion of a disk cartridge, as will be described more fully with respect to Figure 18.

The apparatus has two mechanisms by which the magazine 10 can be unlocked: (1) an automatic mechanism which moves the cartridge lock into its unlocked condition as the magazine is inserted into the jukebox 14; and (2) a manual unlocking function which utilizes the manual release tab 136. The automatic function is necessary to insure that the magazine is unlocked when it is inserted into the jukebox unit so that the robotic cartridge retrieval mechanism inside the jukebox unit can remove a selected cartridge from the magazine and transport it to a disk reading location. The manual unlocking function facilitates loading and unloading of disks when the magazine is not inside the jukebox, i.e., when the user wishes to modify the selection of disks stored in the magazine.

### (b) Automatic Unlocking Function

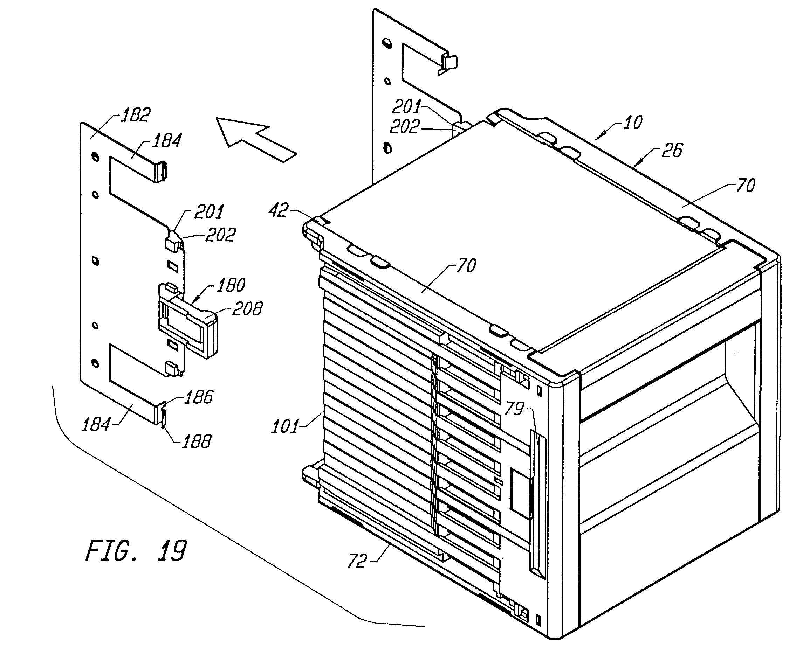

As can be seen in Fig. 19, the tangs 186 and the tabs 188 on the spring plate 182 (which as discussed with respect to Fig. 7 is mounted to wall 178 with the tabs 188 extending through the wall) are positioned to engage with a respective one of the plates 70 on the magazine side 26 when the magazine 10 is inserted into the jukebox 14 (not shown in Fig. 19). Tangs 186 are free to travel between between surfaces 120 and shoulders 128 (see Fig. 12) while close to but not touching surface 124 (see the tang 186 shown in dashed lines in Fig. 14) because side surfaces 121 of plates 70 slide in contact with the tabs 188. The magazine 10 is advanced into the jukebox (not shown) until, as shown in Fig. 14, tab 164 of the cartridge lock 150 collides with the tang 186.

Continued advancement of the magazine 10 into the jukebox causes the tab 164 to catch on the tang 186, thereby preventing the cartridge lock 150 from moving further into the jukebox with the magazine side 26. As result, the cartridge lock 150 is moved forward within the magazine side 26 to compress the spring 174 and to thereby position the cartridge lock 150 in the unlocked condition shown in Fig. 14. As described above, this moves the elongate plate 152 away from the spring members 94, allowing them to deflect outwardly in response to removal of a cartridge 12 from the back of the magazine 10.

### (c) Locking Function of Manual Release Tab

Referring to Figs. 13 and 17B, when the magazine 10 is in the locked condition the manual release tab 136 is positioned such that its rectangular plate 137 at least partially covers the cut-out 110 in the magazine side 26. The camming block 144 of the manual release tab 136 extends through the slot 161 of the cartridge lock 150.

To manually slide the cartridge lock 150 into the unlocked condition, the rectangular plate 137 is lifted at fingernail catch 148 (Fig. 4A) and pivoted away from the magazine side 26 (around cylindrical projections 142) in the direction indicated by the arrow in Fig. 17B. As the manual release tab 136 pivots, the camming block 144 pushes against the cartridge lock 150 from within slot 161 thereby pushing the cartridge lock 150 towards the front of the magazine side. As described above (see Fig. 14) when the cartridge lock 150 is in the forward, unlocked condition, the portion 152 of the cartridge lock 150 no longer blocks movement of the spring members 94 and thus creates a gap for movement of the spring members.

When the manual release tab 136 is moved to the unlocked condition, recessed surface 146 (best shown in Fig. 4A) engages with rectilinear projection 168 of cartridge lock 150 as shown in Fig. 17A. Manual release tab 136 will remain in this position until it is manually returned to its locked condition (Fig. 17B) or until it is cammed into the locked condition by the leading edge of the jukebox housing 212 during installation of the magazine into a jukebox.

### (d) Misinsertion Prevention

Fig. 18 illustrates what happens when a user attempts to insert disk cartridges 12 into the magazine 10 wrong-end first. As described earlier, a disk cartridge has a tapered end A and a squared end B. The magazine is designed to receive cartridges that are inserted tapered-end A first. When squared end B is inserted into the magazine 10, its corner G collides with the protrusion 102 on the spring member 94 causing the spring member 94 to deflect outwardly.

When the cartridge lock 150 is in its unlocked condition, the blocking members 172 remain spaced from the protrusions 102 in order to prevent over-deflection of the spring members 94. The corners G of an improperly inserted disk cartridge would require deflection of the spring members 94 beyond that which is allowed by the blocking members 172. Thus, when a wrongly-inserted disk cartridge pushes a spring member 94, the spring member 94 collides with its corresponding blocking member 172 and cannot deflect any further. Since the deflection is not sufficient to allow passage of the disk cartridge into the slot, the user's inability to advance the cartridge further into the slot indicates to the user that the disk cartridge is being improperly inserted.

### (e) Magazine Insertion and Latching

The magazine 10 is inserted into the jukebox chamber 18 via open door 20 (Fig. 1). Shelves 218 on each of the jukebox walls 178 (Fig. 7) receive the bottom one of the plates 70 of the magazine side 26 and, as described above with respect to the automatic locking function (Fig. 14), the tab 188 engage with the plates 70. Referring to Fig. 19, as the magazine is inserted into the chamber 18, the ramped portion 99 of the magazine sides 26 presses against the ramped surface 202 of the release tab 180. This deflects the spring plate 182 away from the wall 178 as side 201 (see Fig. 6A) of surface 202 rides along the outermost surface of the magazine sides 26. As the magazine 10 reaches the end of its travel, the rear edge 101 (Fig. 19) of magazine side 26 contacts the push plate 236 of the magazine stop 234 (Fig. 7), causing the user to encounter the spring forces exerted by extension spring 240.

The user continues pushing the magazine 10 into the jukebox 14, further extending the extension spring 240 until the travel of the push plate 236 is halted when tabs 242 come into contact with the rear edges of the cut-outs 230. At this point, the latching face 81 of the magazine side 26 has just passed alignment with the face 204 of latch member 192 of the release tab 180 as shown in Fig. 20. This relieves the pressure exerted by the exterior of the magazine side 26 against the latch member 192, and thus allows the latch spring plate 182 to return to its undeflected condition. The latch member 192 snaps inwardly, engaging with the similarly angled latching face 81 on the magazine side 26.

The extension spring 240, via the push plate 236, pushes the magazine 10 slightly forward and in doing so causes the latching faces 79 on the magazine side 26 to intimately engage with the latch member 192. To prevent excessive vertical play of the magazine 10 within the jukebox 14, guide pins 222 (Fig. 7) engage magazine sides 26 between the shoulders 128 and the surfaces 120.

To remove the magazine 10 from the jukebox 14, the user applies outward force, either separately or simultaneously, to the arms 208 of the release tabs 180. The resulting deflection of the arms 208 is sufficient to disengage the latch member 192 from the latching faces 81 on the magazine side 26. The tension forces in the spring 240 are sufficient to partially eject it from jukebox 14 (i.e. to push it sufficiently forward so that it is obvious to the user that the magazine is no longer latched within the jukebox) as soon as the latch member 192 is disengaged from the latching face 81. The user can then grip the handle formed by the plate 58 and the recessed portion 56 of the magazine front section 30 (Fig. 2A) to remove the magazine 10 from the jukebox 14.

### (f) Automatic Cartridge Re-Locking

It should be pointed out that as the magazine 10 is removed from the jukebox 14, the tab 164 of the cartridge lock 150 is moved away from tang 186 which, at all times when the magazine is installed, pushes the cartridge lock 150 against the compression spring 174 in order to keep the magazine unlocked. As the magazine 10 is withdrawn from the jukebox 14 and the tab 164 is thus moved away from the tang 186, the cartridge lock 150 is pushed by the springs 174 back into its locked condition (Fig. 11) so that the disk cartridges 12 will not fall out of the magazine 10 after the magazine 10 is removed from the jukebox 14.

### (g) Magazine Misinsertion Prevention

Tabs 42 on the back edge 38 of magazine top 22 (see Fig. 2A) help to prevent a user from inserting the magazine 10 into the jukebox 14 upside down. Should a user attempt to install the magazine 10 upside down, the tabs 42 will contact vertical projections 219 on the shelves 218 (see Fig. 7), indicating to the user that the magazine is being installed improperly.

### (h) Magazine Stackability

One magazine may be stacked upon another with a fair degree of stability by engaging small protrusions 45 on the magazine sides 26 of one magazine with corresponding depressions 47 on the magazine sides of another magazine. These protrusions and depressions are best shown in Fig. 2A and 3C.

### III. ALTERNATIVE EMBODIMENTS

Three additional configurations for releasably locking a magazine within a jukebox will next be described.

### (a) First Alternative Embodiment

The first alternative embodiment utilizes an alternative latch spring mechanism 300 which is operable in connection with the latching face (Figs. 2A, 19 and 20) formed on exterior surface 68 of the magazine sides 26 (not shown).

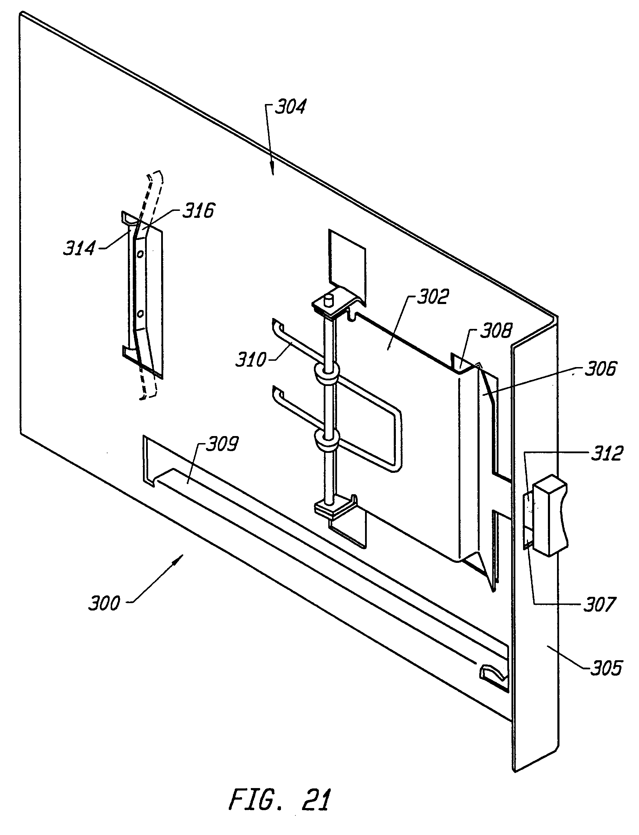

Referring to Fig. 21, the first alternative latch spring assembly 300 is a jukebox wall 304 similar to the wall 178 of Figs 7 and 8 (and which is adjacent to one of the magazine sides 26 (Fig. 2A) when a magazine is installed in a jukebox). Each wall 304 includes a front section 305 which extends laterally of the remaining portion of the wall and which has a cutout 307. As with the preferred embodiment, the wall 304 has a shelf 309 for supporting one side of a magazine. Because the latch spring assemblies and jukebox walls of the first alternative embodiment are mirror images of each other, only one is shown and described.

The latch spring assembly comprises a spring plate 302 mounted to the wall 304. The spring plate 302 has a latch member 306 which has a similar cross-sectional shape to that of the latching face 79 on the magazine side 26 (see Fig. 20) and which extends through an opening 308 in the wall 304.

A torsion spring 310 is connected between the wall 304 and one end of the spring plate 302. Extending from the other end of the spring plate 302 is an arm 312 which protrudes through the cutout 307 in the portion 305 of wall 304.

A tab 314 extends laterally off the wall 304 and supports a formed stop spring 316.

Operation of the first alternative embodiment is similar to that of the preferred embodiment. As a magazine 10 (not shown) is inserted into a jukebox having the first alternative latch spring assembly, the magazine side 26 (not shown) pushes against latch member 306 of the spring plate 302. This results in outward deflection by the spring plate 302, causing the spring plate 302 to move against the tension applied by the torsion spring 310.

Eventually, the rear 101 (see Fig. 19) of the magazine side 26 pushes against formed spring 316 and the latching face 81 (not shown) of the magazine side becomes aligned with latch member 306 of spring member 302. The magazine 10 is propelled slightly forward by the formed spring 316 and, at the same time, the latch member 306 snaps into secure engagement with the latching face 81 (not shown).

To release the magazine from the jukebox, the arm 312 of each jukebox wall 304 is pulled away from the magazine side, causing the latch member 306 of the spring plate 302 to move out of the latching face 81 (not shown), thus allowing the formed spring 316 to propel the magazine slightly from the jukebox.

It should be appreciated that with this and the other embodiments, springs such as the torsion spring are not needed if the associated components possess the desired resiliency. For example, if spring plate is sufficiently resilient to snap the latch portion 306 into engagement with latching face 81, torsion spring 310 is not needed.

### (b) Second Alternative Embodiment

Like the first alternative embodiment, the second alternative embodiment utilizes an alternative latch spring mechanism which is operative in connection with the latching surface 81 on the magazine sides 26.

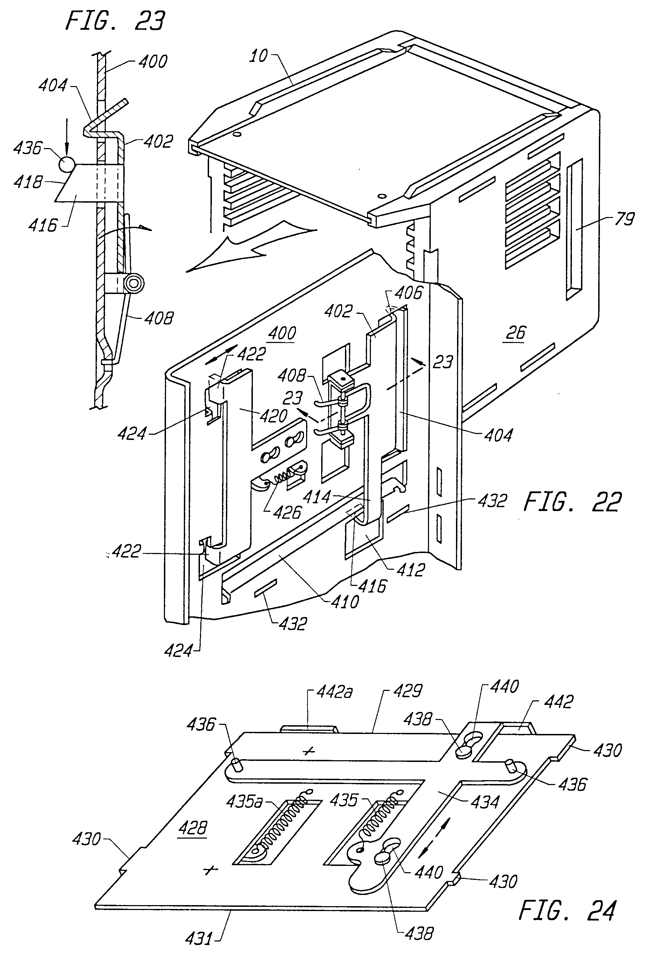

Fig. 22 shows a second alternative jukebox wall 400 which, as with the jukebox wall of the preferred and second alternative embodiments, would preferably be positioned vertically within a jukebox and parallel to a second jukebox wall having identical (but mirror-image) features as the wall 400. The wall 400 includes a spring plate 402 having a latch portion 404 extending through an aperture 406 in the wall 400. A torsion spring 408 is connected between the spring plate 402 and the wall 400.

A shelf 410 is formed in the wall 400 and is proportioned to support one side of a magazine 10. Immediately below the shelf 410 is an aperture 412. An arm 414 extends downwardly from the spring plate 402 and includes a tab 416 which passes through the aperture 412. The tab 416 has a beveled surface 418.

A magazine stop 420, which operates in a manner similar to the magazine stop 234 of the preferred embodiment (see Figs. 7 and 8) is mounted to the wall 400. It includes a pair of push plates 422 which extend through a pair of apertures 424 in the wall 400. The magazine stop 420 is slidable relative to the wall in the directions indicated by arrows in Fig. 22. These arrows correspond to the directions in which a magazine is inserted into and ejected from a jukebox in which the wall 400 is mounted.

A spring 426 is connected between the magazine stop and the wall and biases the magazine stop 420 towards the spring plate 402.

In the second alternative embodiment, the mechanism for releasing a magazine from the jukebox resides in a release plate 428 mounted between the jukebox walls below the shelf. Referring to Fig. 24, a release plate 428 is a rectangular plate having tabs 430 proportioned for insertion into corresponding slots 432 in the wall 400. In its preferred form, the release plate 428 is positioned horizontally. A front edge 429 of the release plate is positioned near the opening in the jukebox through which the magazine is installed (which, in jukebox 14 of Fig. 1, would be near the door 20). A rear edge 431 is positioned further inside the jukebox.

Mounted to the top side of the release plate 428 is a release member 434. The release member includes a pair of vertically extending release pins 436.

As shown in Fig. 23, the pins 436 are positioned such that when the walls 400 and release plate 428 are installed in a jukebox, each release pin 436 is directly adjacent to the beveled surface 418 of its corresponding release cam 418.

The release member 434 is connected to the release plate 428 by pins 438 fixed to the release plate 428. The pins 438 are loosely engaged with slots 440 in the release member 434 so that the release member 434 can be moved relative to the release plate 428 in the directions indicated by arrows in Fig. 24, which correspond to the magazine insertion and ejection directions. A spring 435 is attached between the release member 434 and the release plate 428 to bias the release member 434 towards the front edge 429 of the release plate 428.

A release tab 442 is connected to an end of the release member 434, near front edge 429 of the release plate 428.

Operation of the second alternative embodiment during insertion of a magazine into a jukebox having the above-described latch spring assembly is similar to the operation of the preferred and first alternative embodiments. During insertion of the magazine 10 into the jukebox, the magazine side 26 pushes against latch portion 404 of the spring plate 402, causing the spring plate to deflect away from the wall 400 until the latch portion 404 snaps into latch surface 81 on the magazine side.

Once the magazine 10 abuts the push plates 422, the spring 426 causes push plates 422 of the magazine stop 420 to push the magazine slightly forward. This ensures that the latch portion 404 is snugly engaged with the latch surface 81.

To release the magazine 10 from the jukebox, the release tab 442 is pushed towards the back edge 431 of the release plate 428. This advances the release member 434 against the force of the spring 435. The resulting rearward motion of the release member 434 causes the release pin 436 to push against beveled surface 418 of release cam 416 and to thereby deflect the spring plate 402 away from the wall 400. It should be appreciated that the other of the release pins 436 would simultaneously engage with a second release cam on the opposite jukebox wall, which is not shown in the drawings.

This deflection of the spring plate 402 removes the latch portion 404 from the latch surface 81 and thus allows the magazine 10 to be propelled slightly forward by the spring action of push plates 422.

It should finally be noted that a second release member, operative with respect to a second magazine stacked below the magazine 26 of Fig. 22, may be mounted to the underside of release plate 428. The release tab 442a and the spring 435a of this second release member can be seen in Fig. 24. A second spring plate would be mounted to wall 400 beneath the spring plate 402, and a second magazine stop would be mounted beneath the magazine stop 420.

The second spring plate would be identical to the spring plate 402, except that its arm (see arm 414) would extend vertically upward and it would have a release cam (like the release cam 416) extending through aperture 412 directly below the release cam 416 of the first spring plate 402. Thus, release pins identical to the release pins 326 would displace their corresponding release cams upon manual sliding of the second release tab 442a.

### (c) Third Alternative Embodiment

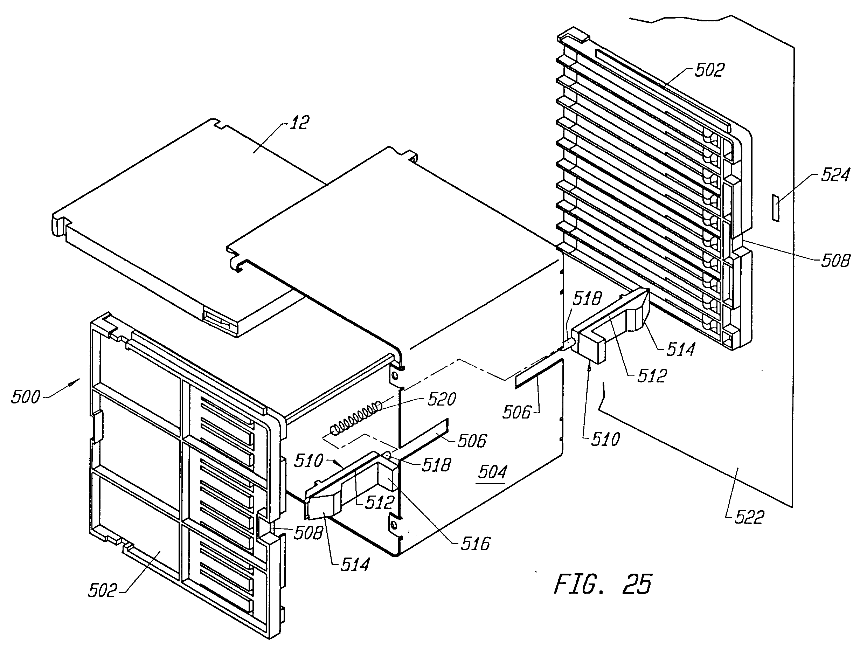

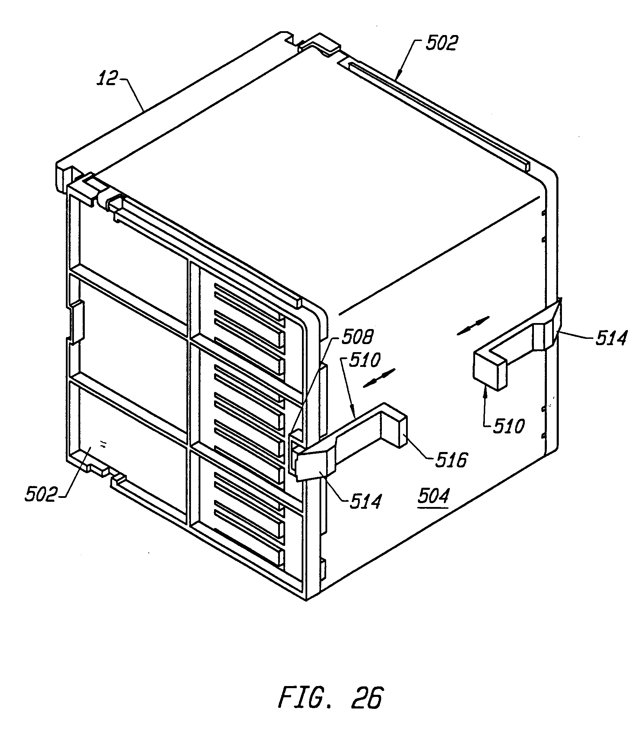

Figs. 25 and 26 show a first alternative embodiment of a cartridge magazine 500. This embodiment utilizes release tabs mounted to the magazine and engageable with the interior surface of the jukebox wall.

The magazine 500 has a pair of magazine sides 502 and a front wall 504 connected between them. The front wall 504 has a pair of inwardly extending slots 506, and each magazine side 502 has a pair of cutouts 508 each of which is adjacent to one of the slots 506 when the magazine 500 is assembled.

A pair of release tabs 510 are mounted to the slots 506. Each release tab 510 is an elongate block having a groove 512 extending through it on opposite sides of the block. A locking head 514 is formed at one end of the tab 510, and a handle 516 and a cylindrical projection 518 are formed at the opposite end.

The release tabs 510 are slidably disposed within the slots 506 such that portions of the front wall 504 immediately adjacent to the slots are received within the grooves 512. The tabs 510 are oriented such that the locking heads 514 extend towards the magazine sides 502 and such that the cylindrical projections 518 face each other. A compression spring 520 is disposed around the cylindrical projections 518.

The release tabs 510 have a locking state, in which the spring 520 is in an expanded condition and in which locking heads 514 extend through the cutouts 508 in the magazine sides 502. An unlocking state is achieved by pushing the handles 516 towards each other to depress the spring and to thereby slide the release tabs 510 inwardly such that they no longer extend through the cutouts 508.

A portion of a jukebox wall, which lies adjacent to a magazine side when the magazine is installed in a jukebox, is designated 522 in Fig. 25. The wall 522 is provided to have a notch 524 which, when the release tabs are in the locking state, receives the locking heads 514 and thereby causes the magazine to become locked within the jukebox.

The apparatus of the present invention has been described with respect to a preferred embodiment and three alternative embodiments. However, it should be appreciated that the invention may be practiced in a variety of ways. This description is not intended in a limiting sense, as the scope of the present invention is to be limited only in terms of the appended claims.

## Claims

1. An apparatus for latching a cartridge magazine within a cartridge storage device, the apparatus comprising:
a cartridge storage housing, including a housing wall and defining a chamber;
a magazine having a wall positioned to be adjacent to the housing wall when the magazine is within the chamber;
a latch member connected to one of the wall and the housing wall and biased away from said one of the wall and the housing wall into a locking condition;
actuating means for moving the latch member into an unlocking condition by overcoming bias force on the latch member; and
a latch surface formed on the other of the housing wall and the wall, and positioned to receive the latch member when the magazine is inside the chamber and the latch member is in the locking condition.

2. The apparatus of claim 1 wherein:
the latch member is connected to the housing wall inside the chamber; and
the actuating means includes a protrusion on the latch member and a camming surface on the magazine wall, the protrusion positioned to be cammed against the bias of the latch member by the camming surface during insertion of the magazine into the chamber.

3. The apparatus of claim 1 further comprising:
release means manually operable to move the latch member against its bias to disengage the latch member from the latch surface.

4. The apparatus of claim 1:
wherein the magazine has a first side and a second side, the housing has a first side and a second side;
wherein the magazine has a proper insertion orientation, in which the first side of the magazine is adjacent to the first side of the housing, and an improper insertion orientation in which the first side of the magazine is adjacent to the second side of the housing; and
wherein the apparatus further comprises:
a projection mounted within the housing chamber, at the second side; and
a tab connected to the magazine, at the first side, the tab positioned to collide with the projection when the magazine is inserted into the chamber in the improper insertion orientation.

5. The apparatus of claim 1 wherein: the magazine includes an insertion end; and the apparatus further comprises:
stop means mounted to the housing within the chamber, for receiving the insertion end of the magazine and for exerting a spring force against it.

6. The apparatus of claim 5 wherein the stop means includes a push plate and a spring connected between the push plate and the housing.

7. The apparatus of claim 5 wherein the stop means includes a formed spring mounted to the housing.

8. The apparatus of claim 5 further comprising:
release means manually operable for moving the latch member against its bias to disengage the latch member from the latch surface to cause the magazine to be at least partially ejected from the chamber by the stop means.

9. The apparatus of claim 8 wherein the release means includes a release lever connected to the latch member.

10. The apparatus of claim 1 wherein:
the latch member is connected to the magazine wall;
the latch surface comprises a notch in the jukebox wall; and
the actuating means comprises a handle manually operable to move the latch member against its bias and manually releasable to allow the latch member to advance by action of its spring bias into the locking condition and into engagement with the notch.

11. An apparatus for releasably latching a cartridge magazine into a cartridge storage device, the apparatus comprising:
a magazine including a pair of substantially parallel magazine walls;
a cartridge storage housing including a pair of substantially parallel housing walls, the housing defining a chamber;
a latch member connected to one of the housing walls and biased in a direction towards the other of the housing walls;
a latch surface formed on one of the magazine walls and positioned to engage with the latch member during insertion of the magazine into the chamber; and
camming means for camming the latch member against its bias during insertion of the magazine into the chamber and for releasing the latch member when the latch surface of the magazine is substantially aligned with the latch member.

12. The apparatus of claim 11, wherein:
the camming means includes a camming portion of the magazine wall;
the latch surface includes a recess in the magazine wall; and
the latch member is oriented to be cammed against its bias by the camming portion of the magazine wall during insertion of the magazine into chamber and to engage with the recess when it is substantially aligned with the recess.

13. The apparatus of claim 11 further comprising:
release means manually operable to move the latch member against its bias to disengage the latch member from the latch surface.

14. The apparatus of claim 11:
wherein the magazine has a first side and a second side, the housing has a first side and a second side;
wherein the magazine has a proper insertion orientation, in which the first side of the magazine is adjacent to the first side of the housing, and an improper insertion orientation in which the first side of the magazine is adjacent to the second side of the housing; and
wherein the apparatus further comprises:
a projection mounted within the housing chamber, at the second side; and
a tab connected to the magazine, at the first side, the tab positioned to collide with the projection when the magazine is inserted into the chamber in the improper insertion orientation.

15. The apparatus of claim 11 wherein:
the magazine includes an insertion end; and
the apparatus further comprises:
stop means mounted to the housing within the chamber, for receiving the insertion end of the magazine and for exerting a spring force against it.

16. The apparatus of claim 15 wherein the stop means includes a push plate and a spring connected between the push plate and the housing.

17. The apparatus of claim 15 wherein the stop means includes a formed spring mounted to the housing.

18. The apparatus of claim 15 further comprising:
release means manually operable for moving the latch member against its bias to disengage the latch member from the latch surface and such that the magazine is at least partially ejected from the chamber by the stop means.

19. The apparatus of claim 18 wherein the release means includes a release lever connected to the latch member.

20. An apparatus for releasably latching a cartridge magazine into a cartridge storage device, the apparatus comprising:
a cartridge magazine including a pair of substantially parallel magazine walls;
a cartridge storage housing including a pair of substantially parallel housing walls and an aperture formed in a first one of the walls, the housing defining a chamber;
a spring plate connected to the first housing wall, the spring plate biased in a direction towards the other of the housing walls and having a latch member extending through the aperture towards the other of the housing walls;
a latch surface formed on one of the magazine walls, the latch surface positioned to engage with the latch member during insertion of the magazine into the jukebox interior; and
a camming surface on the same magazine wall as the latch surface, the camming surface automatically engageable with the latch member during insertion of the magazine into the jukebox to cam the latch member in a direction against its bias, and automatically disengageable from the latch member upon engagement of the latch member with the latch surface.

21. The apparatus of claim 20 further comprising:
release means manually operable to move the latch member against its bias to disengage the latch member from the latch surface.

22. The apparatus of claim 20:
wherein the magazine has a first side and a second side, the housing has a first side and a second side;
wherein the magazine has a proper insertion orientation, in which the first side of the magazine is adjacent to the first side of the housing, and an improper insertion orientation in which the first side of the magazine is adjacent to the second side of the housing; and
wherein the apparatus further comprises:
a projection mounted within the housing chamber, at the second side; and
a tab connected to the magazine, at the first side, the tab positioned to collide with the projection when the magazine is inserted into the chamber in the improper insertion orientation.

23. The apparatus of claim 20 wherein:
the magazine includes an insertion end; and
the apparatus further comprises:
stop means mounted to the housing within the chamber, the stop means for receiving the insertion end of the magazine and for exerting a spring force against it.

24. The apparatus of claim 23 wherein the stop means includes a push plate and a spring connected between the push plate and the housing.

25. The apparatus of claim 23 wherein the stop means includes a formed spring mounted to the housing.

26. The apparatus of claim 23 further comprising:
release means manually operable for moving the latch member against its bias to disengage the latch member from the latch surface and such that the magazine is at least partially propelled from the jukebox interior by the stop means.

27. The apparatus of claim 26 wherein the release means includes a release lever connected to the latch member.

28. The apparatus of claim 20 wherein:
a second one of the housing walls includes a second aperture; and
the apparatus further comprises:
a second spring plate connected to the second housing wall, the second spring plate biased in a direction towards the first housing wall and having a second latch member extending through the second aperture towards the first housing wall;
a second latch surface formed on a second one of the magazine walls, the second latch surface positioned to engage with the second latch member during insertion of the magazine into the chamber; and
a second camming surface on the second magazine wall, the second camming surface automatically engageable with the second latch member during insertion of the magazine into the jukebox to cam the second latch member in a direction against its bias, and automatically disengageable from the second latch member upon engagement of the second latch member with the second latch surface.

29. The apparatus of claim 28 wherein the first and second latch members are comprised of identical components.
